**Europäisches Patentamt**

**European Patent Office**

**Office européen des brevets**

(11) Publication number : **0 367 550 B1**

# EUROPEAN PATENT SPECIFICATION

(45) Date of publication of patent specification :
13.12.95 Bulletin 95/50

(51) Int. Cl.⁶ : **G06K 15/12**

(21) Application number : **89311213.6**

(22) Date of filing : **31.10.89**

(54) A drive circuit for a printer

(30) Priority : **01.11.88 JP 276622/88**
**01.11.88 JP 276623/88**
**01.11.88 JP 276624/88**
**29.09.89 JP 253861/89**

(43) Date of publication of application :
**09.05.90 Bulletin 90/19**

(45) Publication of the grant of the patent :
**13.12.95 Bulletin 95/50**

(84) Designated Contracting States :
**DE FR GB**

(56) References cited :
**EP-A- 0 074 860**
**EP-A- 0 283 934**

(73) Proprietor : **SEIKO EPSON CORPORATION**
**4-1, Nishishinjuku 2-chome**
**Shinjuku-ku Tokyo (JP)**

(72) Inventor : **Aoki, Kanji c/o Seiko Epson**
**Corporation**
**3-5 Owa 3-chome**
**Suwa-shi Nagano-ken (JP)**

(74) Representative : **Sturt, Clifford Mark et al**
**J. MILLER & CO.**
**34 Bedford Row**
**Holborn**
**London WC1R 4JH (GB)**

EP 0 367 550 B1

## Description

The present invention relates generally to a drive circuit for a printer, such as an LED printer or a thermal printer.

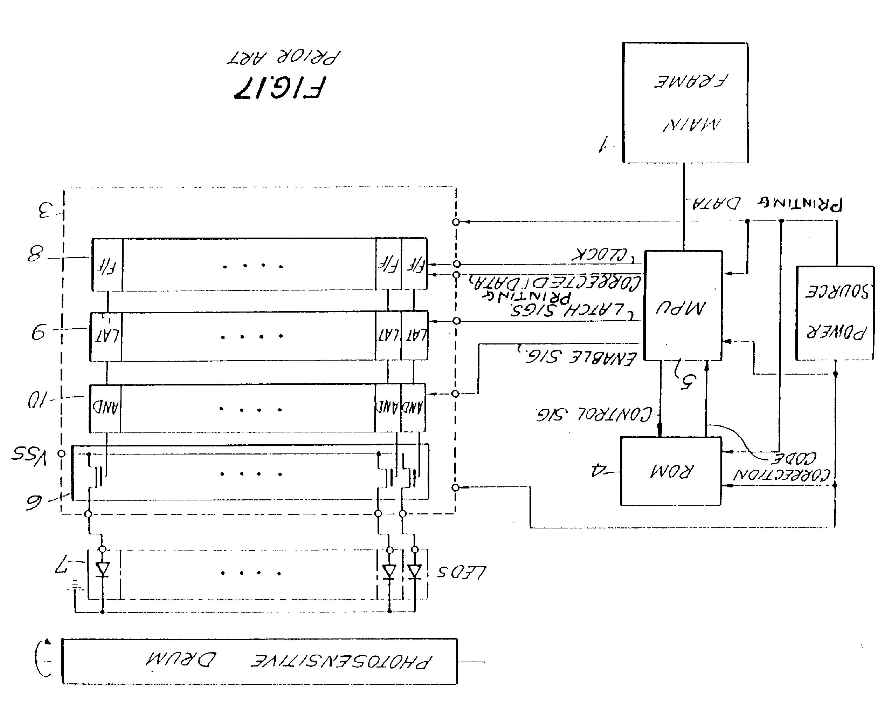

A conventional LED printer has an array of LEDs corresponding to a line to be printed, and each LED of the array is controlled as to its duration of light emission so that a desired print density can be obtained. A typical LED control circuit provided in an LED printer is illustrated in Figure 17. The control circuit comprises a main store 1, provided for example by a main frame computer, for generating data signals and the like, an integrated circuit 3 for driving an LED print head, and a ROM for storing correction codes. The LED control circuit also has a micro-processor 5 which, based on the data signals generated by the main store 1, controls the integrated circuit 3 and the ROM 4. The integrated circuit 3 for driving the LED print head comprises an output transistor array 6 consisting of field effect transistors, each of which is connected to a respective LED of an LED array 7 in the form of an integrated circuit. The period of emission of the individual LEDs is controlled so that a variation in emission strength among the LEDs can be corrected.

Operation of the LED control circuit is as follows. On receiving a data signal for a line of print from the main store 1, the micro-processor 5 generates and delivers a control signal to the ROM 4, so as to obtain correction code data from the ROM 4. The micro-processor 5 then corrects the individual bits of the printing data for the line of print in accordance with the correction code data to thereby produce corrected printing data. The corrected printing data is supplied to a flip-flop constituting the least significant bit of a shift register 8. The data correcting operation is carried out such that each bit of the printing data for the line of print is sequentially converted into corrected printing data consisting of three latch cycles, each latch cycle being selected to vary the duty ratio of the driving signal for the LED.

Suppose that the LED at the left hand side in the LED array 7 has the lowest emission strength among the LEDs in Figure 17. A correcting operation to adjust for such emission strength in this case is carried out as follows. A correction code representing a value of 7 is stored before-hand in the ROM 4 at an address corresponding to this left hand side LED. The main store 1 provides the micro-processor 5 with printing data for a line of print including one bit for driving the left hand side LED. Upon receiving this bit, the micro-processor 5 generates and supplies a control signal to the ROM 4 to obtain therefrom the correction code data for the line including the correction code valued 7 for the left hand side LED. In response to this correction code data, the micro-processor 5 produces a series of three bit values as corrected printing data signals and delivers them to the shift register 8 in response to a latch signal.

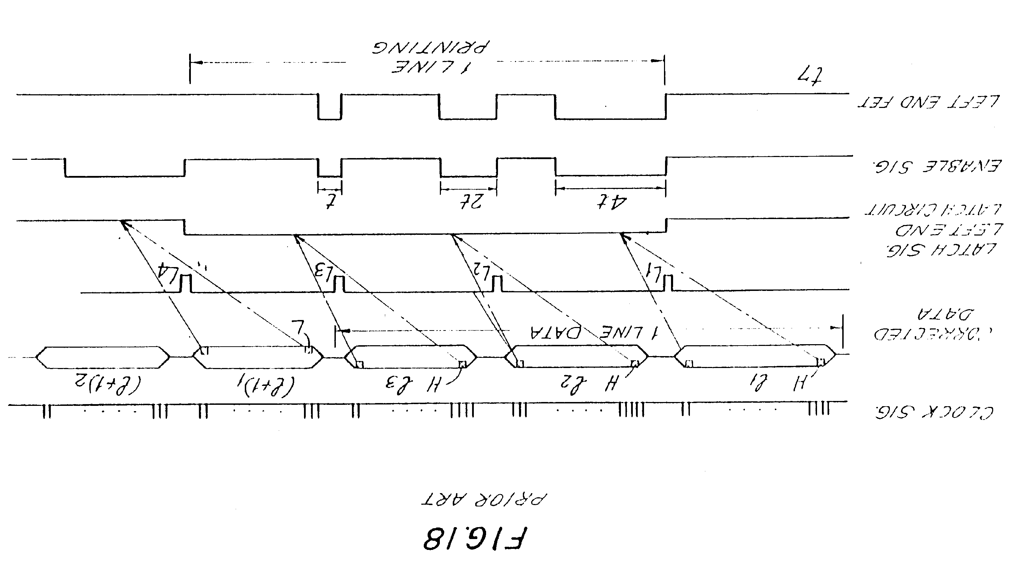

Referring now to Figure 18, the printing operation for the $\ell$th line will be described. The data signal for the $\ell$th is firstly converted into three blocks of corrected printing data signals $\ell_1$, $\ell_2$, $\ell_3$. The first corrected printing data signal $\ell_1$ is stored in the shift register 8 in response to a clock signal and is supplied from the shift register 8 to a latch array 9 in response to a latch signal $L_1$. The first corrected printing data signal $L_1$ includes a logically high bit corresponding to the left hand side LED, and so the left hand side latch is maintained logically high. In synchronisation with the delivery of the latch signal $L_1$, the micro-processor 5 delivers an enable signal having a pulse width of 4t to an output control circuit 10. The output control circuit 10, which comprises an array of AND gates and voltage level shift circuits (which are denoted simply as "AND" in Figure 17), delivers a control "ON" signal to the left hand side FET of the transistor array 6 while the enable signal is being supplied from the micro-processor 5. The left hand side FET is switched to an ON state by the control "ON" signal and, during the ON state, permits current to pass from a power supply $V_{SS}$ to the left hand side LED. Thus, the left hand side LED is driven to emit light during the period of 4t. By the end of this 4t period, the second corrected printing data signal $\ell_2$ has already been supplied to the shift register 8. Therefore, the second corrected printing data signal is latched by the latch circuit in response to the next latch signal $L_2$.

The second corrected printing data signal $\ell_2$ includes a logically high bit corresponding to the left hand side LED and so the left hand side latch circuit is held logically high on receipt of the latch signal $L_2$. The supply of the latch signal $L_2$ coincides with the delivery of an enable signal having a pulse width of 2t to the output control circuit 10, which drives the left hand side LED through the left hand side FET to cause the LED to emit light for the period of time 2t.

Likewise, the third corrected printing data signal $\ell_3$ has been stored in the shift register 8 during the delivery of the enable signal constituting the pulse having a pulse width of 2t. The third corrected printing data signal is latched by the latch circuit in response to the latch signal $L_3$. At this time, the left hand side latch circuit is also maintained logically high. The output from the latch circuit and an enable signal having a pulse width of 1t are supplied to the output control circuit 10, so that the left hand side FET is turned "ON", which, in turn, makes the left hand side LED emit light for a period 1t.

As mentioned above, the enable signal includes the pulses of pulse width 4t, 2t and 1t, each pulse being delivered to the output control circuit 10 in response to one of the latch signals. In the output control circuit 10,

2

the printing data signal is converted into three driving signals in a row in accordance with the corrected printing data signals $\ell_1$, $\ell_2$, $\ell_3$.

In the above, as the left hand side LED has the weakest emission strength and the correction code stored for it in the ROM 4 is the maximum value (= 7), the LED is controlled to emit light intermittently for the entire period of time 7t. Likewise, in response to the stored values in the ROM 4, the other LEDs are controlled so as to emit light for periods incrementing from 1t to 7t as appropriate, so that the emission strength of the respective LEDs is compensated and, therefore, the print densities obtained from the LEDs of different emission strengths are adjusted to a desired standard.

As mentioned above, the integrated circuit for driving the LED print head controls the light emission period of each LED to adjust the total emission quantity of each LED to a desired level, in order to avoid unevenness in the printing due to a variation in emission strength among the LEDs of due to a variation in current carrying capacity among the FETs forming the output transistor array. In other words, the FETs corresponding to the respective LEDs are controlled to vary their "ON" times in seven steps by means of the respective three latch cycles.

However, this adjustment needs the three latch cycles in each line printing operation. An LED printer with this adjustment control can only have its printing speed increased by reducing the pulse width, which is limited to a certain extent. In particular, an LED printer of the type having a large number of LED positions for a line of printing cannot easily achieve a desired high speed printing operation. Moreover, it is necessary to produce a series of three corrected printing data bits in accordance with the enable signal for each LED and each line printing operation, which necessitates a complicated program or complicated control of the micro-processor 5.

EP-A-0283934 discloses a driving circuit, comprising the features of the preamble of claim 1, for a led array for a printer which is divided into a plurality of drivers for every driving output and is so constructed that the control of the sum of the currents flowing therethrough is set by selecting one of a plurality of the divided drivers by using digital signals. However this circuit cannot compensate for fluctuations in supply voltage.

Accordingly, it is an object of the present invention to provide a drive circuit which is capable of adjusting the output strength of a plurality of printing elements to be driven by varying the amplitude of the drive signals supplied to each of the elements.

Another object of the present invention is to provide a drive signal supply circuit, which comprises a plurality of switching elements for driving each of the printing elements.

According to the present invention, there is provided a drive circuit for driving plural printing elements of a print head for a printer, comprising a store for receiving signals representing printing data for at least a portion of a line of print, output circuit means responsive to such signals for generating plural outputs for driving the printing elements respectively for printing the at least a portion of the line of print, and output control means responsive to predetermined correction codes for selectively adjusting the outputs whereby to compensate for variation in the characteristics of the respective printing elements and/or of circuit elements of the output circuit means for supplying the respective outputs wherein the output control means and the output circuit means are arranged to co-operate such that the amplitudes of the outputs are adjusted according to the correction codes, the output circuit means comprising plural circuit portions (18-1 to 18-m), each including a plurality of switching elements ($F_{T1}$ to $F_{T15}$) for controlling the supply of current from a current source, the switching elements of each output circuit portion being connected in parallel so as to form a current synthesising circuit, wherein each output circuit portion has a number N of the switching elements divided into $\underline{n}$ groups characterised in that the number of switching elements belonging to the i-th group is $2^{i-1}$, wherein n<N, $1 \leq i \leq n$, each group of the switching elements being controlled by a corresponding bit of an n-bit digital control signal supplied by the output control means, and wherein the switching elements of each group are arranged symmetrically of the centre of the array of the switching elements and at equi-spaced intervals.

Preferred embodiments of the present invention are set forth in the dependent claims.

According to the arrangement of the switching elements, the number of control lines for the supply of the control signals to the switching elements can be reduced to $\underline{n}$, which is much smaller than N. Thus, deposition of the control lines on an integrated circuit can easily be obtained. In contrast, if N switching elements are controlled independently through individual control lines, the number of the control lines for each switching means becomes as much as N. This tends to result in a lack of space for the overall circuit configuration and semi-conductor layout.

Each of the switching elements, which has a current capacity as quantified unit of current output, may be a single field effect transistor or a parallel connection of two or more field effect transistors. The switching element will normally be a single field effect transistor. However, in view of semi-conductor layout, it is possible that the quantified unit of the current output (corresponding to resolution) will not be obtained through a single field effect transistor. In this case, each of the switching elements may be two or more field effect transistors to increase the total amount of current capacity thereof for defining the quantified unit of current output.

In addition, output pads corresponding respectively to each of the switching means are normally arranged in a row, and so each switching means is preferably arranged between adjacent output pads. In this case, it is preferable for the N switching elements to be formed in a semi-conductor substrate such that they are of the same shape and size, and are arranged in a line at the same intervals to form a switching element array. The array of N switching elements can extend in the channel direction of the field effect transistors, or in the direction normal to that.

Where the switching elements have the same current capacity, the output current will increase in proportion to the number of the switching elements to be driven. For instance, the current level is increased by two times if four switching elements are energised by the fourth bit of an $n$-bit digital signal in comparison with that obtained by two switching elements being energised by the second bit of the digital signal. However, owing to manufacturing inaccuracy, a plurality of the switching elements cannot easily be produced on a semi-conductor substrate such that they have equal current capacity, even if they are formed to the same shape and size. In the photo-lithographic process for forming, for example, gate electrodes of field effect transistors, the resulting gate electrodes are inevitably different in shape, although by very little, due to the manfucturing inaccuracy, which causes variation in the current capacity of the field effect transistors or switching elements. Consideration must be given to this variation in current capacity among the switching elements, otherwise the output current of each switching means cannot be expected to increase in proportion to the number of switching elements to be energised.

It is observed that, where a plurality of switching elements, such as field effect transistors, are arranged in an array on a semi-conductor substrate, the variation in the current capacity among the switching element shows monotonic characteristics in the direction of the array. A typical example is that the current capacity increases monotonically in the direction from the switching element positioned at one end of the array to that positioned at the other end thereof. In this case, the switching element positioned at the middle of the array exhibits approximately an average current capacity, while those positioned at one side of the array exhibit lower current capacity and those at the opposite side exhibit higher current capacity. If N switching elements are divided into $n$ groups such that the switching elements belonging to the first to the last $n$-th groups are positioned in this order from one end of the array to the other, the average current capacity of the switching elements belonging to each group will differ among the groups. Thus, there is a possibility that the output current will drop when energisation of the switching elements is shifted from one group to the next one adjacent to it.

In order to avoid this defect, there is provided a drive signal supply circuit having a plurality of switching means, each constituting an array or row of switching elements, wherein the switching elements of each switching means are appropriately divided into $n$ groups so that the variation in the current capacity existing among the switching elements due to manufacturing inaccuracy can be corrected or minimised. The first one of the $n$ groups includes a single switching element which is situated at the middle of the array. The switching elements disposed one by one in the direction from the middle switching element to both ends of the array are then divided amongst the $n$ groups in the following order, which is symmetrical relative to the middle switching element:

$$n \rightarrow (n-1) \rightarrow n \rightarrow (n-2) \rightarrow n \rightarrow (n-3) \rightarrow \cdots n \rightarrow 2 \rightarrow n \rightarrow \cdots \rightarrow n \rightarrow (n-2) \rightarrow n \rightarrow (n-1) \rightarrow n$$

With such an arrangement, the middle switching element belonging to the first group displays an average current capacity, and the average current capacity for the switching elements belonging to each of the other groups is also substantially the same value. This ensures that digital values for the $n$-bit control signal correspond linearly to the output current level of each of the $n$ groups even when variation in the current capacity exists among the individual switching elements arranged in the array. In addition, even if the switching elements exhibit a current capacity which varies monotonically along the array, the output current level is at least expected to increase monotonically. The arrangement of the switching elements according to the present invention enables a current synthesising circuit or digital-to-analog converter (DAC) to be realised without undesirable drop in current due to the variation in the current capacity among the switching elements arranged in an array.

In the above described array, each switching element may constitute one or more switching transistors, such as field effect transistors. Where each of the switching elements constitutes two or more switching transistors, the transistors comprising one switching element can be positioned adjacent to one another or such that a switching transistor forming another switching element from another group is interposed between them. More specifically, in the case of an array of switching elements wherein each of the switching elements constitutes two or more field effect transistors positioned symmetrically in the array and connected in parallel with each other, the transistors may be arranged such that the transistors forming one switching element belonging to one group are positioned with other transistors belonging to another group interposed between them.

On the other hand, in the case that the current capacity of the switching elements from one end of an array

EP 0 367 550 B1

to the other shows unevenness and follows a curve having a turning point, as opposed to a monotonically increasing or decreasing curve as described above, switching elements constituting two or more switching transistors are preferably arranged as follows. The two or more switching transistors belonging to the first group are arranged to have their centre of gravity positioned in the centre of the array. The switching transistors belonging to the respective remaining groups are arranged so that the switching transistors of each element, respectively, have their centres of gravity arranged in the following order in the direction from said centre of gravity of the first group to both ends of the array, the order being expressed by the group numbers 1 to $\underline{n}$ to which the switching transistors belong:

$$n \rightarrow (n-1) \rightarrow n \rightarrow (n-2) \rightarrow n \rightarrow (n-3) \rightarrow \cdots n \rightarrow 2 \rightarrow n \rightarrow \cdots \rightarrow n \rightarrow (n-2) \rightarrow n \rightarrow (n-1) \rightarrow n$$

According to this arrangment, the variation in current capacity among the switching elements can be overcome or corrected to a greater extent that if the switching transistors belonging to the same switching element were disposed adjacent to one another. In particular, the variation in current capacity among the switching transistors along the array can effectively be compensated where such variation exhibits a characteristic curve having a turning point around the centre of the array. Thus, the linearity of current output in response to digital input can be improved considerably.

In a preferred embodiment, each switching means is provided with one or more field effect transistors, which have a relatively high current capacity compared to the switching transistors comprising the switching elements and which is or are common to all of the switching elements in the switching means. With this configuration, the output current from each of the switching means can be modified in N steps of smaller degree without increasing the number of switching means.

The present invention may be employed in an LED printer, but also in a plasma display device or the like, which is provided with plural elements to be driven. In the case of a plasma display device, a DAC according to the present invention may be used for tonal displaying.

The present invention will be described further, by way of example, with reference to the accompanying drawings, wherein:-

Figure 1 is a schematic block diagram of a control circuit for an LED printer, incorporating a drive circuit according to the present invention;

Figure 2 is a detailed block diagram of a portion of the drive circuit;

Figure 3 illustrates in detail a control and level shifting circuit comprising a portion of an output control circuit of the drive circuit;

Figure 4 illustrates in detail a current synthesising circuit comprising a portion of an output circuit of the drive circuit;

Figure 5 is a timing chart for illustrating the operation of the drive circuit;

Figure 6 is a schematic plan view illustrating a chip layout for the drive circuit;

Figure 7 is a plan view showing the semi-conductor structure of the current synthesising circuit;

Figure 8 (a) to 8 (d) are sectional views taken along the lines VIIIa - VIII′a, VIIIb - VIII′b, VIIIc - VIII′c and VIIId - VIII′d in Figure 7, respectively;

Figure 9 is a graph showing a characteristic line representing the variation in current capacity of switching transistors arranged in an array on a semi-conductor substrate in the current synthesising circuit, together with a characteristic line representing their output current with respect to a hypothetical digital input signal;

Figure 10 is a graph representing a linear variation in current capacity of the switching transistors, together with a linear variation in their output current with respect to a digital signal in the preferred embodiment of the present invention;

Figure 11 is a graph representing a monotonic variation in current capacity of the switching transistors, together with a monotonic variation in their output current with respect to a digital input signal in a variation on the preferred embodiment of the present invention;

Figure 12 illustrates an alternative arrangement for the current synthesising circuit;

Figure 13 is a graph representing a linear variation in current capacity of the switching transistors in the arrangement of Figure 12, together with a linear variation in their output current with respect to a digital input signal;

Figure 14 illustrates a further arrangement for the current synthesising circuit;

Figure 15 is a schematic view showing the pattern of the arrangement of Figure 14;

Figure 16 is a graph representing a variation in current capacity of the switching transistors of Figure 14, which follows a curve exhibiting a turning point at a position near the centre of the transistors, together with a monotonic variation in their output current with respect to a digital input signal;

Figure 17 is a block diagram of a conventional control circuit for an LED printer; and

Figure 18 is a timing chart for illustrating the operation of the control circuit of Figure 17.

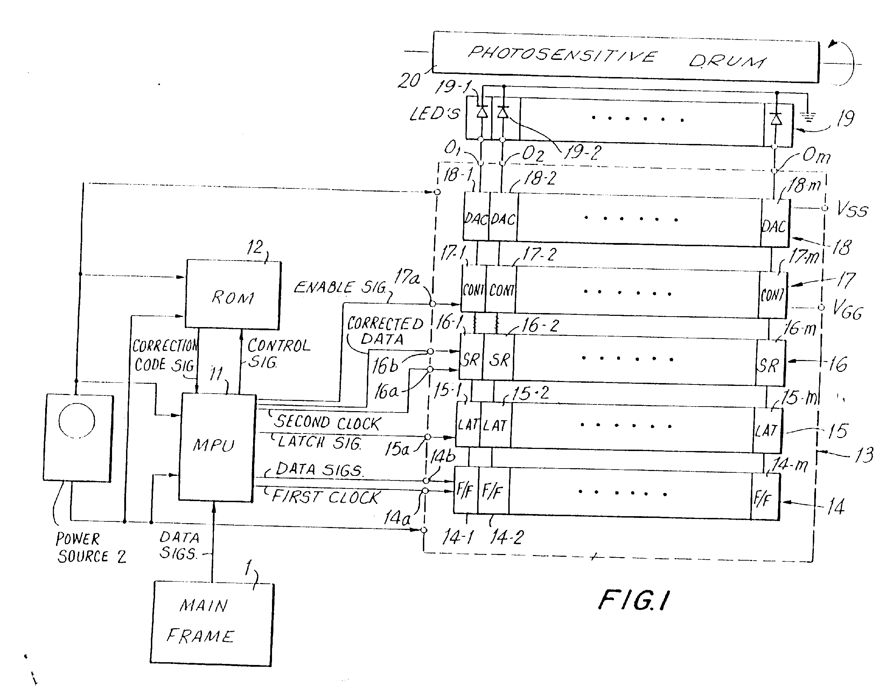

Figure 1 illustrates a control circuit for an LED printer having a drive circuit according to the present in-

5

vention. The control circuit comprises a main store 1 provided by a computer for supplying signals, such as data signals, to a micro-processor 11. The micro-processor 11 supplies control signals to a ROM (read only memory) 12 and receives from the ROM 12 correction code data. The correction code data is stored in the ROM 12 before-hand and is used for correcting the light emission of the LEDs forming a print head as described hereinafter. The micro-processor 11 also delivers the data signals, latch signals, the correction code data signals, enable signals and the like to an integrated circuit 13 for driving the LED print head.

This integrated circuit 13 comprises a data shift register 14 which receives the data signals for a line of printing via the micro-processor 11 in response to a first clock signal from the micro-processor 11, an array 15 of latch circuits for receiving the contents of flip-flops (F/Fs) in the data shift register 14 and storing them temporarily in response to the latch signal, and a correction data shift register 16 for serial parallel conversion of the correction code data signals in response to a second clock signal to produce 4 bit digital signals. The integrated circuit 13 also comprises an output control circuit 17 for generating gate signals in accordance with the 4 bit digital signals and the enable signals, and an output circuit 18 having a plurality of current synthesising or switching circuits 18-1 to 18-m, these current synthesising or switching circuits being controlled by the gate signals.

An LED array 19, in the form of an integrated circuit, comprises a plurality of LEDs 19-1 to 19-m, each connected to a corresponding one of the current synthesising circuits 18-1 to 18-m of the output circuit 18, such that the LEDs are supplied with electric current from a power source $V_{SS}$ so as to emit light when the corresponding current synthesising circuits are turned on. A photo-sensitive drum 20 is disposed in front of the array of LEDs 19-1 to 19-m. The reference numeral 2 designates the power supply for the device.

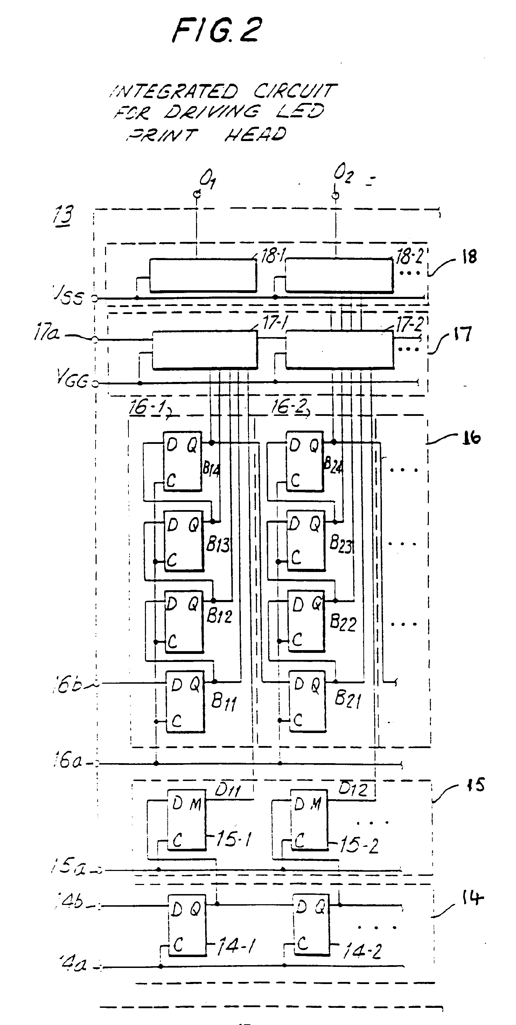

Figure 2 illustrates the drive circuit 13 for the LED print head. The data shift register includes D type flip-flops 14-1 to 14-m. Each time a clock pulse of the first clock signal is supplied to a clock terminal 14a, and thence to a clock input C of each flip-flop, binary serial data at a data terminal 14b is shifted from each flip-flop to the next flip-flop of the higher stage. In this manner, serial data for a line of printing is converted into parallel data.

The array 15 includes latch circuits 15-1 to 15-m in the form of D type flip-flops, which store temporarily the contents of corresponding stages of the shift register 14 in response to the latch signal when this is applied to a latch terminal 15a and thence to latch input C of the latch circuits 15-1 to 15-m.

The correction data shift register 16 includes an array of 4m D type flip-flops, each having a correction code data input D. A correction data terminal 16b receives correction code data in the form of binary 4m-bit serial data and the input correction code data is shifted from one flip-flop to the next in response to pulses of the second clock signal supplied to a clock terminal 16a. More specifically, the correction data shift register 16 comprises $\underline{m}$ partial shift registers 16-1 to 16-m, each including four D type flip-flops and generating 4 bit parallel signals, such as ($B_{14}$, $B_{13}$, $B_{12}$ and $B_{11}$) for correcting the intensity of light emission of a corresponding LED.

The output control circuit 17 comprises $\underline{m}$ circuit portions 17-1 to 17-m, each circuit portion including control and level shifting circuits. Each of the control and level shifting circuits receives printing data (such as $D_{l1}$) output from the corresponding latch circuit of the latch array 15, and at the same time receives 4 bit correction code data (such as $B_{14}$, $B_{13}$, $B_{12}$ and $B_{11}$) from the corresponding partial shift register of the correction data shift register 16. The control and level shifting circuits then deliver 4 bit gate signals to a corresponding current synthesising circuit (described below) in response to the enable signal, which is input to an enable terminal 17a.

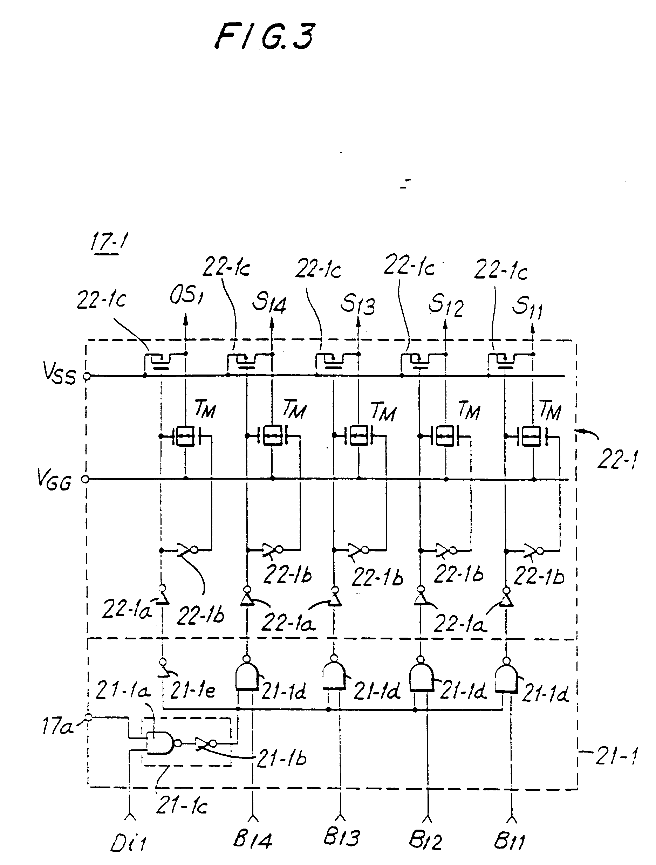

Referring to Figure 3, the control and level shifting circuit 17-1 of the output control circuit 17 is illustrated. The remaining circuits 17-2 to 17-m are of the same circuit structure as the circuit 17-1.

The control and level shifting circuit 17-1 comprises a logic control circuit 21-1 and a level shifting circuit 22-1. In the present embodiment, the data signal D is set to be logically high where printing is to be carried out and to be logically low where printing is not to be carried out. In addition, the enable signal is set to be logically high for defining a printing period and to be logically low for defining a non-printing period. The logic control circuit 21-1 includes a print mode decision circuit 21-1c, which comprises a NAND gate 21-1a for receiving the enable signals and the data signals $D_{l1}$, and an inverter 21-1b serially connected to the NAND gate in order to set the LED 19-1, corresponding to the control and level shifting circuit 17-1, selectively to be on or off. The logic control circuit 21-1 also includes a respective NAND gate 21-1d for receiving each bit of the correction code data signal and an inverter 21-1e. The NAND gates 21-1d receive the 4 bit serial correction code data signals $B_{14}$, $B_{13}$, $B_{12}$ and $B_{11}$) as correction data and the print mode signal from the print mode decision circuit 21-1c, and produce a 4 bit digital signal, which is supplied to a digital-to-analog converter of the respective current synthesising circuit (described below). The inverter 21-1e inverts the print mode signal.

The control and level shifting circuit 17-1 comprises five level shifting circuit portions of the same structure for producing an off-set gate control voltage $OS_1$ and gate control voltages $S_{14}$, $S_{13}$, $S_{12}$ and $S_{11}$ for the digital-

EP 0 367 550 B1

to-analog converter. Each of the level shifting circuit portions includes an inverter 22-1a for inverting the output signal from the inverter 21-1e or one of the NAND gates 21-1d, a transmission gate $T_M$ for receiving both the output signal from an inverter 22-1b and the inverted output signal as control inputs and for delivering an external gate bias voltage $V_{GG}$, and a P channel MOSFET 22-1c for setting the output of the transmission gate $T_M$ in its off state to be the same voltage as the external source voltage $V_{SS}$.

The print mode decision circuit 21-1c generates the print mode signal, which is converted into the offset control signal $OS_1$ whose voltage varies between the external gate bias voltage $V_{GG}$ and the external source voltage $V_{SS}$. The outputs of the NAND gates 21-1d are also converted into the digital-to-analog coverter gate signals $S_{14}$, $S_{13}$, $S_{12}$ and $S_{11}$ having their voltage varying between the above voltages $V_{GG}$ and $V_{SS}$, respectively.

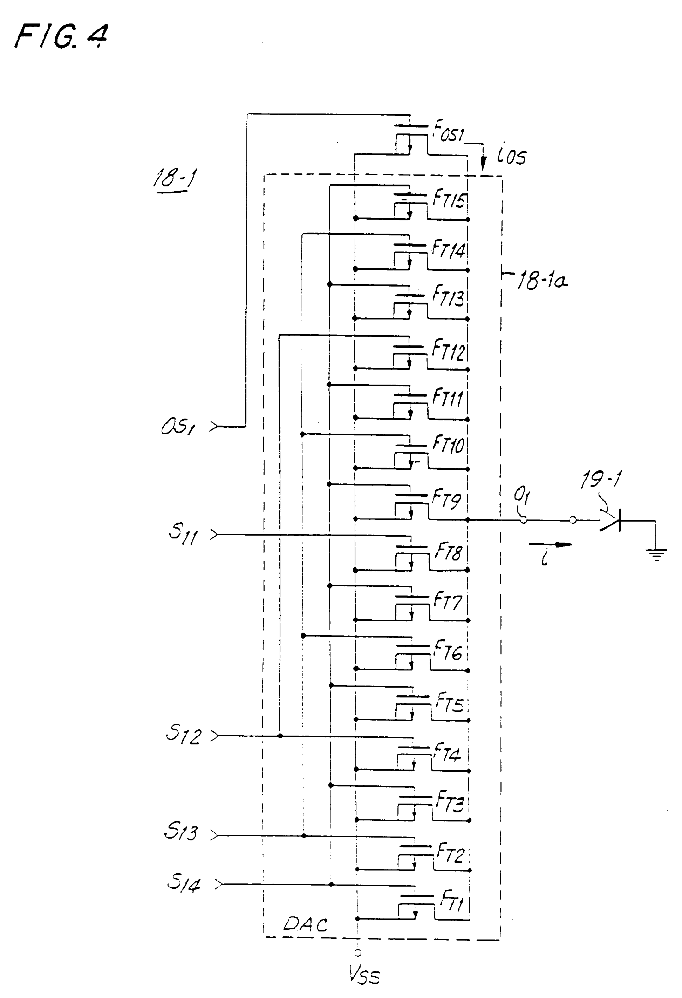

Figure 4 illustrates the current synthesising or switching circuit 18-1 of the output circuit 18 shown in Figure 2. Each of the current synthesising circuits 18-1 to 18-m comprises a digital-to-analog converter and a field effect transistor for off-setting.

The current synthesising circuit 18-1 shown in Figure 4 includes a current output type digital-to-analog converter 18-1a, comprising a parallel connection of fifteen P channel field effect transistors $F_{T1}$ to $F_{T15}$ having the same current capacity, and a single P channel field effect transistor $F_{OS1}$, having a current capacity which is one third of the total current capacity of the field effect transistors $F_{T1}$ to $F_{T15}$. Of these, one transistor $F_{T8}$ is supplied with the signal $S_{11}$ as a gate signal, two transistors $F_{T4}$ and $F_{T12}$ are supplied with the signal $S_{12}$ as a gate signal, four transistors $F_{T2}$, $F_{T6}$, $F_{T10}$ and $F_{T14}$ are supplied with the signal $S_{13}$ as a gate signal, and the remaining eight transistors $F_{T1}$, $F_{T3}$, $F_{T5}$, $F_{T7}$, $F_{T9}$, $F_{T11}$, $F_{T13}$ and $F_{T15}$ are supplied with the signal $S_{14}$ as gate signal. The transistors are set to be on when the corresponding gate signals are at a low level. The current synthesising circuit 18-1 is formed on a semi-conductor substrate, the structure of which will be described hereinafter.

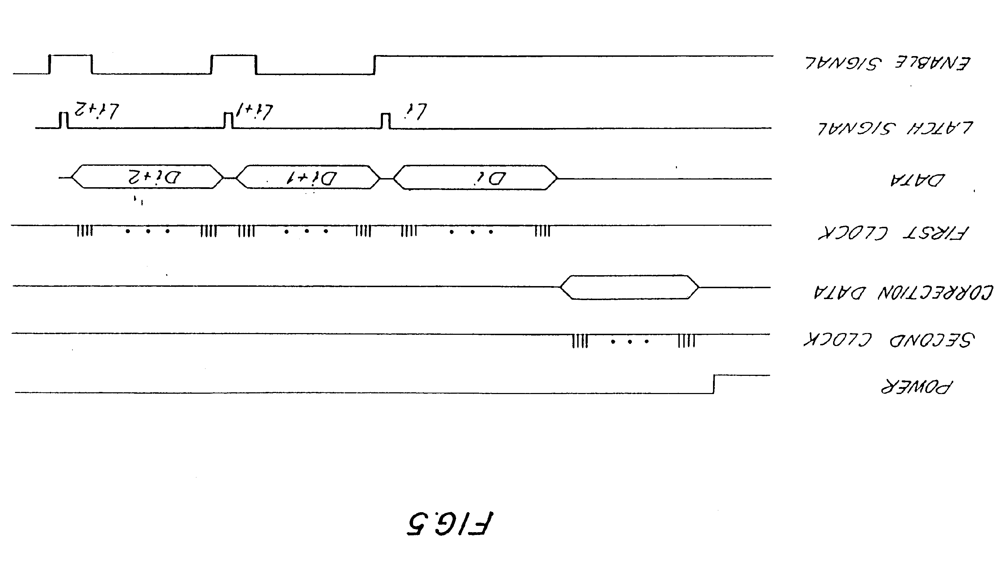

The operation of the above mentioned embodiment will now be described with reference to Figure 5. The operation begins with the supply of power from the power source 2. Then, the micro-processor 11 delivers the control signal to the correction data storage ROM 12 which, in turn, provides the micro-processor 11 with the correction code data signals. The micro-processor 11 delivers the received correction code data signals along with the second clock signal to the correction data shift register 16. In the present embodiment, a line of print comprising $\underline{m}$ dots, and the correction code data signal is in the form of a 4m-bit serial digital signal, each 4 bits thereof representing the correction data for one dot. The micro-processor 11 generates the correction code data signals and the second clock signal only for a predetermined period of time from the application of power. The first 4 bits of the serial digital signals are input into the flip-flops of the least significant bit of the shift register 16 in response to each pulse of the second clock signal and are thereafter transferred to the further partial shift registers. Thus, after 4m pulses of the second clock signal, 4m-bits of the serial digital signal have been stored in the shift register 16. Since the micro-processor 11 does not generate the second clock signal after that, the serial digital signal or correction code data is maintained in the shift register 16. Consequently, by way of example, the partial shift register 16-1 of the shift register 16 is maintained such that the first bit of $B_{11}$, the second bit of $B_{12}$, the third bit of $B_{13}$, and the fourth bit of $B_{14}$, representing the 4 bit signal (corresponding to one dot correction data) appear at the output terminals thereof.

After the correction data signal is stored in the shift register 16, the first clock signal is generated and, in response to that, the data signal is delivered to the data shift register 14 via the micro-processor 11. Assuming $D_i$ is the print data for the i-th line to be printed, the data $D_i$ is stored in the data shift register 14 in response to $\underline{m}$ pulses of the first clock signal. The micro-processor 11 then generates the latch signal $L_i$ and delivers it to the latch circuit array 15. In response to the latch signal, the latch circuits 15-1 to 15-m receive and retain therein the outputs (the data $D_i$) of the corresponding flip-flops 14-1 to 14-m. Thus, the data $D_{i1}$ to $D_{im}$ appears at the outputs of the latch circuits 15-1 to 15-m.

Next, the printing operation of the LEDs will be explained, taking the LED 19-1 as an example. When the enable signal becomes logically high, a decision as to whether the LED 19-1 is to be driven to emit light or not is made according to the level of the data signal $D_{i1}$. That is, where the data signal $D_{i1}$ is logically high, the print mode decision circuit 21-1c outputs a logically high signal, while where the signal $D_{i1}$ is logically low, the circuit 21-1c outputs a logically low signal. Where the output of the circuit 21-1c is high, the transmission gate $T_M$ is energised to pass the gate bias voltage $V_{GG}$ as the signal $OS_1$ therethrough to the P channel field effect transistor $F_{OS1}$, which, in turn, is energised. At the same time, the correction code data signal in the form of $B_{14}$, $B_{13}$, $B_{12}$ and $B_{11}$ is supplied to the control and level shifting circuit 17-1. Where the bit $B_{14}$ is high and the bits $B_{13}$, $B_{12}$ and $B_{11}$ are low, the signal $S_{14}$ is set to be the gate bias voltage $V_{GG}$ while the signals $S_{13}$, $S_{12}$ and $S_{11}$ are set to be the source voltage $V_{SS}$. In this case, the transistors $F_{T1}$, $F_{T3}$, $F_{T5}$, $F_{T7}$, $F_{T9}$, $F_{T11}$, $F_{T13}$, $F_{T15}$ of the digital-to-analog converter 18-1a are set to be on. In the present embodiment, the field effect transistor $F_{OS1}$ has the current capacity $i_{OS}$, and each transistor of the digital-to-analog converter 18-1a has the current capacity $i_O$, and therefore, the amplitude of the current supplied by way of an output terminal $0_1$ of the current

7

EP 0 367 550 B1

synthesising circuit 18-1 to the LED 19-1 becomes ($i_{OS}$ + 8 $i_O$ ) in the case where only the signal $S_{14}$ is set to be the gate bias voltage $V_{GG}$.

Depending on the signals $S_{14}$, $S_{13}$, $S_{12}$, $S_{11}$ the amplitude of the current $\underline{i}$ applied to the LED 19-1 varies from $i_{OS}$ to ($i_{OS}$ + 15 $i_o$).

$$i_{OS} \leqq i \leqq i_{OS} + 15\ i_O \quad (1)$$

Accordingly, by preparing correction code data, which represents the current amplitudes required to be supplied to the LEDs for compensating for the intensity of light emission by the LEDs, and storing such data in the ROM 12 before-hand, all of the LEDs can be adjusted to achieve a desired light emission intensity whereby unevenness of printing can be avoided or suppressed. In addition, since the unevenness of printing can be avoided by varying the current supplied to each of the LEDs, one line of printing can be performed using only one latch cycle. This allows the printing speed to be faster. In fact, the printing speed in the present embodiment may be three times as fast as that of the conventional print head. Furthermore, since the data signals do not need to be modified but are just transferred, and the correction code data signals are stored in the shift register 16 once only for establishing the current to be supplied to the LEDs, the programming and control of the microprocessor 11 can be simplified. Moreover, each dot in one line of printing can be controlled independently, either by modifying the correction code data for each dot prestored in the ROM or by directly supplying desired correction code data as required.

The effect of the provision of the P channel field effect transistor $F_{OS1}$ for off-setting is as follows. The unevenness of light emission strength among the LEDs is expected to be approximately in the range of 20%. Each of the LEDs emits light of an intensity in proportion to the current supplied thereto. Thus, the off-set transistor $F_{OS1}$ is provided to supply current to the LEDs having an amplitude, which is the minimal value required to cause light emission by each of the LEDs, whereby only the unevenness of the emission, that is about 20% of the light emission intensity, is to be modified by the digital-to-analog converter 18-1a. Accordingly, in the present invention, the unevenness of the light emission intensity among the LEDs can be suppressed to an extent, which is in the range of about 1%.

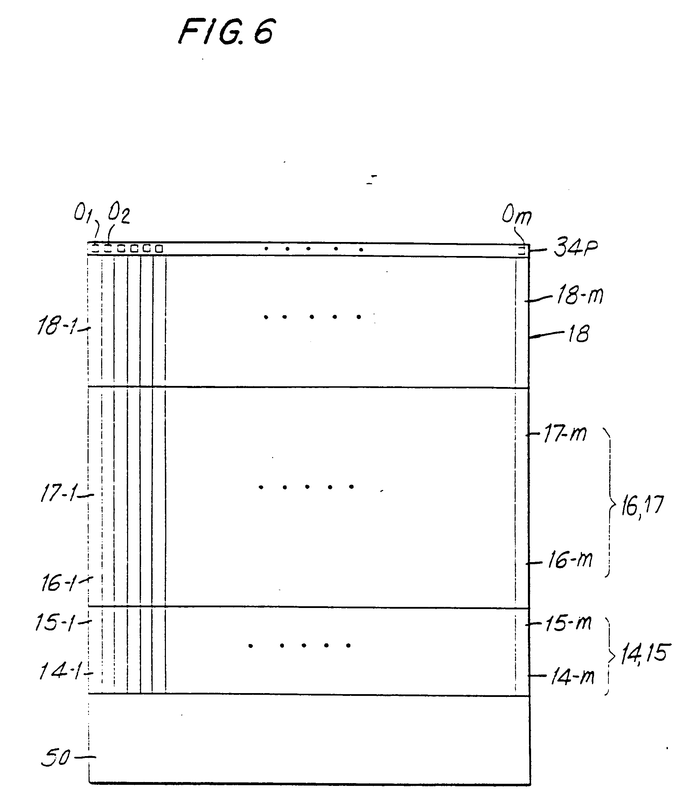

Figure 6 illustrates an example of a layout on a semi-conductor chip of the drive circuit for a LED print head. As shown in the drawing, the integrated circuit chip is mainly divided into the following portions: a logic portion 50; a data shift register and latch circuit array portion 14, 15 wherein the flip-flops 14-1 to 14-m and latch circuits 15-1 to 15-m are arranged in two rows; a correction data shift register and output control circuit portion 16, 17 wherein the partial shift register 16-1 to 16-m and control and level shifting registers 17-1 to 17-m are arranged in two rows; an output circuit portion 18 consisting of the current synthesising circuits 18-1 to 18-m arranged in a line; and a pad portion $34_P$ wherein output terminals corresponding to the respective current synthesising circuits 18-1 to 18-m are disposed.

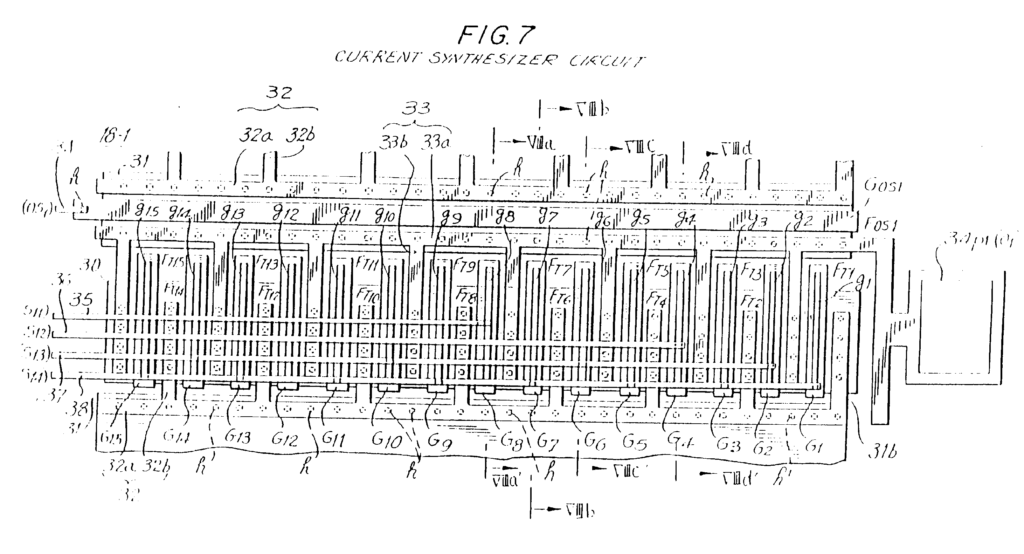

Referring now to Figure 7, the semi-conductor structure of the current synthesising circuit 18-1 shown in Figure 4 will be described. As can be seen, the current synthesising circuit 18-1 comprises fifteen field effect transistors $F_{T1}$ to $F_{T15}$ , which are of the same shape and size and are formed on a substrate such that they are arranged in a row at the same intervals. More specifically, the transistors have strips of poly-silicon providing gates $G_1$ to $G_{15}$ arranged in a row at the same intervals. An active region 30 extends along the row of the gates $G_1$ to $G_{15}$ except in the regions below the gates $G_1$ to $G_{15}$. The active region 30 can be formed by means of self alignment using the poly-silicon gates $G_1$ to $G_{15}$ as a mask for ion injection. The channel length of the transistors is defined by the width of the poly-silicon gates $G_1$ to $G_{15}$, and the channel width is defined by the width of the active region 30.

The off-setting P channel field effect transistor $F_{OS1}$ has a poly-silicon gate $G_{OS1}$ which extends in the form of a strip along the row of the transistors $F_{T1}$ to $F_{T15}$. An active region 31 of this transistor $F_{OS1}$ extends in the direction of the row of the transistors $F_{T1}$ to $F_{T15}$ and along the poly-silicon gate $G_{OS1}$.

A source electrode line 32 applied with the source bias voltage $V_{SS}$ comprises a common electrode line 32a and eight source electrodes 32b. The common electrode line 32a is electrically connected to a P type source region of the active region 31 through a number of contact holes $\underline{h}$ arranged at the same intervals. The source electrodes 32b extend transversely from the common electrode line 32a at the same intervals and are parallel to each other. Likewise, a drain electrode line 33 comprises a common electrode line 33a and eight drain electrodes 33b. The common electrode line 33a is electrically connected via a number of contact holes $\underline{h}$ disposed at the same intervals to a P type drain region of the active region 31 and is connected to a rectangular bonding pad $34_{P1}$ forming the output terminal $0_1$. The drain electrodes 33b extend transversely from the common electrode line 33a at the same intervals and are parallel to each other.

The poly-silicon gate $G_{OS1}$ has one end which is electrically connected to an off-set gate line 34 supplied with the gate signal $O_{S1}$ via the contact hole $\underline{h}$. The poly-silicon gate $G_8$ of the transistor $F_{T8}$ positioned at the middle of the transistor array is connected to a first gate line 35 supplied with the gate signal $S_{11}$, the gates $G_4$, $G_{12}$ are connected to a second gate line 36 supplied with the gate signal $S_{12}$, the gates $G_2$, $G_6$, $G_{10}$, $G_{14}$

8

are connected to a third gate line 37 supplied with the gate signal $S_{13}$, and the gates $G_1$, $G_3$, $G_5$, $G_7$, $G_9$, $G_{11}$, $G_{13}$, $G_{15}$ are connected to a fourth gate line 38 supplied with the gate signal $S_{14}$, respectively.

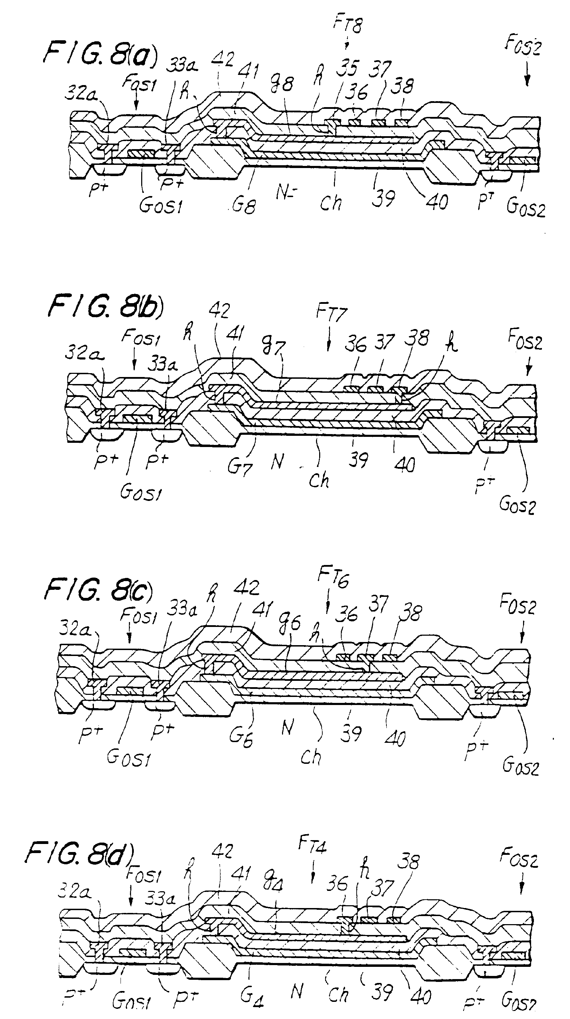

Referring to Figures 8 (a) to 8 (d), the connecting structure between each of the first to the fourth gate lines 35 to 38 of the transistors will be described. As shown in Figure 8 (a), which illustrates the connecting structure between the transistor $F_{T8}$ and the first gate line 35, the transistor $F_{T8}$ comprises a channel region provided between the P type source and drain regions formed on an $\underline{n}$ type semi-conductor substate by diffusion, and the poly-silicon gate $G_8$ formed on a gate oxide film 39 deposited on the surface of the substrate. An insulating layer 40 is disposed on the poly-silicon gate $G_8$ and has a first layer line $g_8$ deposited thereon. The first layer line $g_8$ is electrically connected via one contact hole $\underline{h}$ to the poly-silicon gate $G_8$ and via another contact hole $\underline{h}$ to the first gate line 35, which is a second layer line and is formed on an insulating layer 41.

The poly-silicon gate $G_7$ of the transistor $F_{T7}$, which is to the right of the transistor $F_{T8}$ in Figure 7, is electrically connected via a respective contact hole $\underline{h}$ to a first layer line $g_7$ formed on the insulating layer 40. The first layer line $g_7$ is electrically connected via a further contact hole $\underline{h}$ to a second layer line forming the fourth gate line 38, as shown in Figure 8 (b). Likewise, the poly-silicon gate $G_6$ of the transistor $F_{T6}$ is connected to a second layer line forming the third gate line 37 via a respective contact hole $\underline{h}$, a first layer line $g_6$ and a further contact hole $\underline{h}$ in this order, as shown in Figure 8 (c), while the poly-silicon gate $G_4$ is connected to a second layer line forming the second gate line 36 via a respective contact hole $\underline{h}$, a first layer line $g_4$ and a further contact hole $\underline{h}$ in this order, as shown in Figure 8 (d). The reference numeral 42 denotes a protective layer.

The relationship between the gate lines 35 to 38 (the gate signals $S_{11}$ to $S_{14}$ ) and the transistors $F_{T1}$ to $F_{T15}$ is shown in Table 1 below:

## TABLE 1

| Transistor | $S_{11}$ | $S_{12}$ | $S_{13}$ | $S_{14}$ | Bit No. |
|---|---|---|---|---|---|
| $F_1$ | | | | ◯ | 4 ( n ) |
| $F_2$ | | | ◯ | | 3 ( n-1 ) |
| $F_3$ | | | | ◯ | 4 ( n ) |
| $F_4$ | | ◯ | | | 2 ( n-2 ) |
| $F_5$ | | | | ◯ | 4 ( n ) |
| $F_6$ | | | ◯ | | 3 ( n-1 ) |
| $F_7$ | | | | ◯ | 4 ( n ) |
| $F_8$ | ◯ | | | | 1 |
| $F_9$ | | | | ◯ | 4 ( n ) |
| $F_{10}$ | | | ◯ | | 3 ( n-1 ) |
| $F_{11}$ | | | | ◯ | 4 ( n ) |
| $F_{12}$ | | ◯ | | | 2 ( n-2 ) |
| $F_{13}$ | | | | ◯ | 4 ( n ) |
| $F_{14}$ | | | ◯ | | 3 ( n-1 ) |
| $F_{15}$ | | | | ◯ | 4 ( n ) |

◯ : connected

As shown in Table 1, the transistor $F_{T8}$ is connected to the first gate line 35, which is supplied with the signal $S_{11}$ or the first bit of the 4 bit serial signal. This transistor is positioned in the centre of the transistor array. The transistors $F_{T4}$ and $F_{T12}$ are connected to the second gate line 36, which is supplied with the signal $S_{12}$ or the second bit of the 4 bit serial signal, these transistors being positioned symmetrically with respect to the middle transistor $F_{T8}$ in the transistor array. The transistors $F_{T2}$, $F_{T6}$, $F_{10}$ and $F_{T14}$ are connected to the third gate line 37, which is supplied with the signal $S_{13}$ or the third bit of the 4 bit serial signal. The transistors $F_{T6}$ and $F_{T10}$ are also positioned symmetrically with respect to the middle transistor $F_{T8}$ in the transistor array, as are the other two transistors $F_{T2}$ and $F_{T14}$. The transistors $F_{T1}$, $F_{T3}$, $F_{T5}$, $F_{T7}$, $F_{T9}$, $F_{T11}$, $F_{T13}$ and $F_{T15}$ are connected to the fourth gate line 38, which is supplied with the signal $S_{14}$ or the fourth bit of the 4 bit serial signal. The transistors $F_{T1}$ and $F_{T15}$, $F_{T3}$ and $F_{T13}$, $F_{T5}$ and $F_{T11}$, and $F_{T7}$ and $F_{T9}$ are positioned symmetrically with respect to the middle transistor $F_{T8}$ in the transistor array, respectively. The advantage of the symmetrical arrangement of the transistors with respect to the middle transistor $F_{T8}$ is as follows.

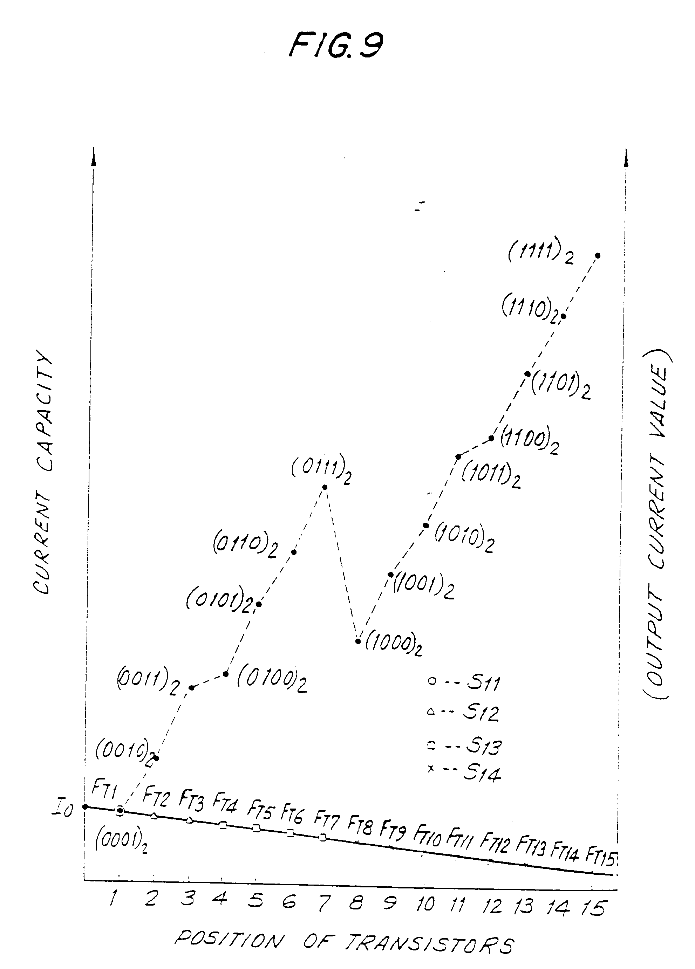

Where the transistors $F_{T1}$ to $F_{T15}$ are formed on a semi-conductor substrate so that they are of the same shape and size and are arranged in a row at the same intervals, the transistors are expected to have the same current capacity. Unfortunately, in the process, such as a plasma etching process, for manufacturing the poly-silicon gates $G_1$ to $G_{15}$, unevenness in the shape of the gates and inaccuracy of mask alignment and the like may give rise to unevenness in the current capacity of the transistors. It has also been observed that the current capacity among the transistors arranged in a row exhibits a monotonic change in the direction of arrangement thereof, typically following a linear characteristic shown by the solid line in Figure 9, whereby the current capacity of the transistors decreases linearly in the direction from the transistor $F_{T1}$ at one end of the transistor array to the transistor $F_{T15}$ at the other end thereof.

If the transistor $F_{T1}$ is controlled by the signal $S_{11}$, the transistors $F_{T2}$ and $F_{T3}$ by the signal $S_{12}$, the transistors $F_{T4}$, $F_{T5}$, $F_{T6}$ and $F_{T7}$, by the signal $S_{13}$, and the remaining transistors $F_{T8}$, $F_{T9}$, $T_{T10}$, $F_{T11}$, $F_{T12}$, $F_{T13}$, $F_{T14}$ and $F_{T15}$ by the signal $S_{14}$, respectively, the change in output current value does not, therefore, increase monotonically as shown by the broken line.

More specifically, in this arrangement, since the transistors are of P type, the gate signal represents a binary "1" in its logically low level and a binary "0" in its logically high level. As the 4 bit serial signal increases in its value from "0001" to "0111", the output current increases monotonically as shown by the broken line in Figure 9. However, the output current when the signal is "1000" is much lower than that when the signal is "0111", and at this point the monotonic increase in the current is broken. In other words, a maximum drop in the output current occurs when signal changes from $2^{n-1}-1$ to $2^{n-1}$ in its binary form. In addition, the current at the points where the 4 bit signal is "1001" and "1010" is lower than at the point where the signal is "0111".

As described above, the unevenness in the current capacity of the transistors may cause a drop in the output current value of the digital-to-analog converter, which is not desirable. Consideration has, therefore, been given in the preferred embodiment as to how to accept the unevenness in the current capacity of the transistors and yet avoid the above drop in the level of the output current. The uneven characteristics of the current capacity shown by the broken line in Figure 9 can be expressed by the following equation:

$$I_N = I_0 - \Delta I \cdot N \quad (2)$$

wherein $I_0$ is constant, N is the order of the transistor counted from the left hand side of the transistor array, and $\Delta I$ is the change in current capacity between the adjacent transistors.

The transistor $F_{T1}$ has the current capacity $I_1$ provided by:

$$I_1 = I_0 - \Delta I \quad (3)$$

and the transistor $F_{T15}$ has the current capacity $I_{15}$ provided by:

$$I_{15} = I_0 - 15 \Delta I \quad (4)$$

In the digital-to-analog converter controlled by the 4 bit serial signal, the point where the current level drop is most likely to occur is in the transition from the value "0111" to the value "1000" of the signal. A condition by which the level drop can be avoided is defined by:

$$\sum_{N=1}^{7} ( I_0 - \Delta I \cdot N ) < \sum_{N=8}^{15} ( I_0 - \Delta I \cdot N ) \cdots (5)$$

which can be simplified to:

$$\Delta I < I_0 / 64 \quad (6)$$

Accordingly, the change $\Delta I$ in the current capacity between the adjacent transistors must be suppressed to less than about 1.5% ($\fallingdotseq$ 1/64 x 100) of the current capacity of the adjacent transistor. The higher the bit number of the digital-to-analog converter, the less the change $\Delta I$ must be. Unfortunately, a change in the current capacity of the transistors exceeding the above value $\Delta I$ is inevitably induced through the manufacturing process no matter how precisely the process control is carried out.

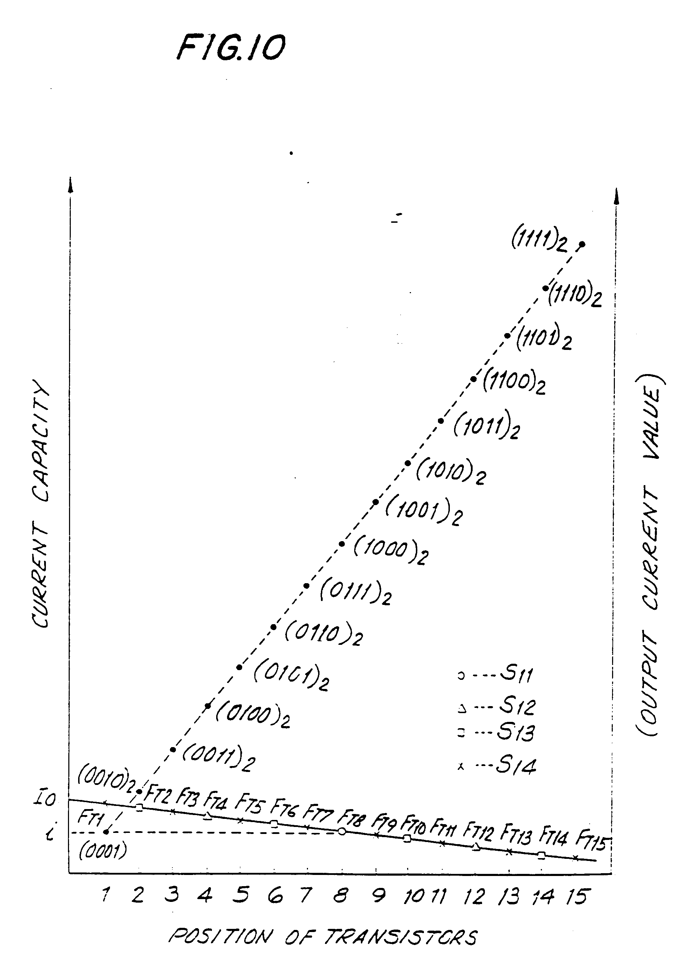

As mentioned above with reference to Figure 7, in the present embodiment, however, the transistors are arranged such that the transistor $F_{T8}$ having as gate input the first bit $S_{11}$ of the serial signal is positioned in the centre of the array, and the transistors having as gate input the same bit of the serial signal are positioned symmetrically with respect to the middle transistor $F_{T8}$. With this arrangement of the transistors, the output' current varies as shown by the broken line in Figure 10, wherein the middle transistor $F_{T8}$ has the current capacity i and the output current value increases monotonically in response to the monotonic increase in the value of the gate signal. The transistors $F_{T4}$ and $F_{T12}$, which receive the second gate signal $S_{12}$, generate a current output amounting to 2i, and the transistors $F_{T1}$, $F_{T15}$, $F_{T3}$, $F_{T13}$, $F_{T5}$, $F_{T11}$, $F_{T7}$ and $F_{T9}$, which receive the third gate signal $S_{13}$, generate a current output amounting to 8i. That is, since the transistors receiving the same gate signal are positioned symmetrically in pairs with respect to the middle transistor $F_{T8}$ having an average current capacity of the transistor array, one of the pair of transistors has a current capacity exceeding the average capacity by + N $\Delta i$, while the other one has a current capacity below the average capacity by - N $\Delta i$. Thus, the total capacity of the pair of transistors amounts to 2i. According to the present embodiment, the unevenness in the current capacity of the transistors generated in their manufacturing process can be overcome or suppressed to the extent that linearity or monotonity of change in the output current with respect to the input signal is maintained.

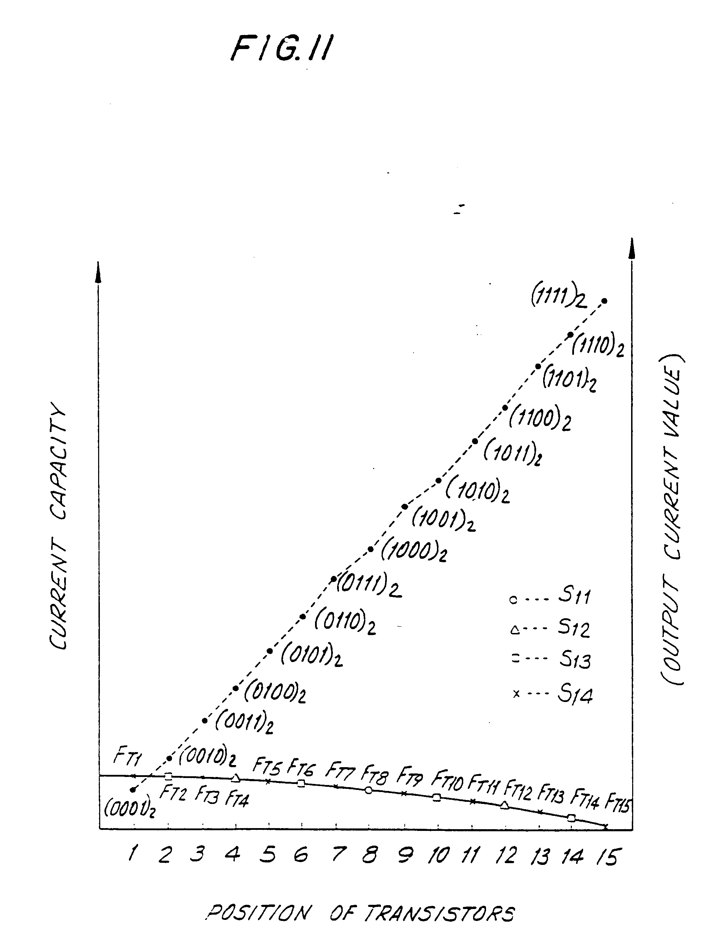

The above analysis is based on the assumption that the unevenness in the current capacity of the transistors exhibits linear characteristcs. Although this assumption can, of course, be applied in many cases, the possibility of the unevenness in the current capacity exhibiting monotonic characteristics represented e.g. by curves of secondary degree must also be considered. For example, such a curve having no turning points is shown by the solid line in Figure 11. In this case, the above arrangement of transistors can also be applied to maintain the monotonity of the increase in the current output as shown by the broken line, although the linear characteristics of the current output are somewhat reduced.

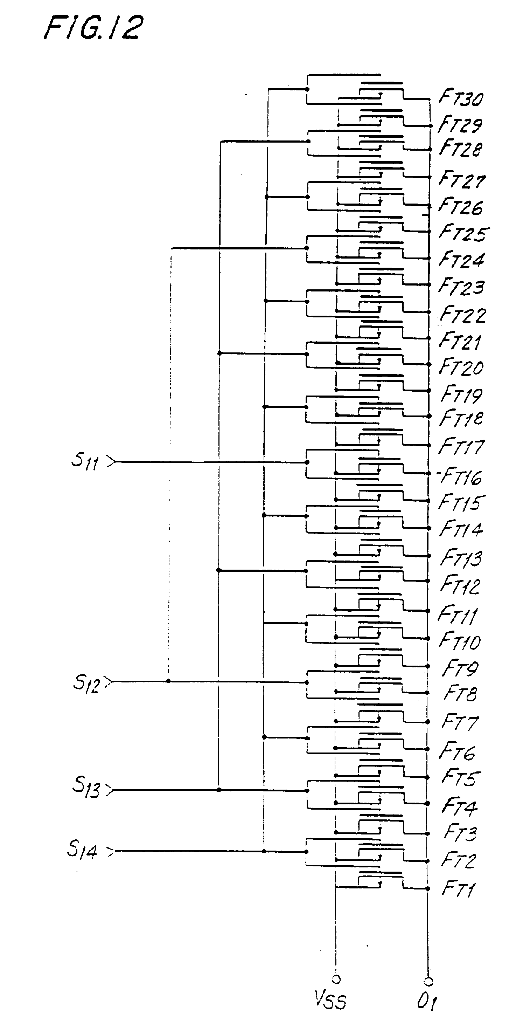

Figure 12 illustrates another example of the transistor arrangement, wherein thirty field effect transistors $F_{T1}$ to $F_{T30}$ forming the digital-to-analog converter are of the same shape and size, and are arranged at the same intervals to form a transistor array. In this array, the gates of the adjacent transistors in each pair are connected to each other, that is $(F_{T1}, F_{T2})$, $(F_{T3}, F_{T4})$, $(F_{T5}, F_{T6})$, $(F_{T7}, F_{T8})$, $(F_{T9}, F_{T10})$, $(F_{T11}, F_{T12})$, $(F_{T13}, F_{T14})$, $(F_{T15}, F_{T16})$, $(F_{T17}, F_{T18})$, $(F_{T19}, F_{T20})$, $(F_{T21}, F_{T22})$, $(F_{T23}, F_{T24})$, $(F_{T25}, F_{T26})$, $(F_{T27}, F_{T28})$, and $(F_{T29}, F_{T30})$ are connected together. Each pair of the transistors therefore functions as a unitary switching element. The pair of transistors $(F_{T15}, F_{T16})$ is located in the centre of the array and is supplied with the gate signal $S_{11}$. Other pairs of transistors which are supplied with the same gate signal are located symmetrically in the array with respect to this pair. More especially, $(F_{T13}, F_{T14})$ and $(F_{T17}, F_{T18})$ are connected to receive the signal $S_{14}$, $(F_{T11}, F_{T12})$, $(F_{T19}, F_{T20})$ are arranged to receive the signal $S_{13}$, $(F_{T9}, F_{T10})$ and $(F_{T21}, F_{T22})$ are arranged to receive the signal $S_{14}$, $(F_{T7}, F_{T8})$ and $(F_{T23}, F_{T24})$ are arranged to receive the signal $S_{12}$, $(F_{T5}, F_{T6})$ and $(F_{T25}, F_{T26})$ are arranged to receive the signal $S_{14}$, $(F_{T3}, F_{T4})$ and $(F_{T27}, F_{T28})$ are arranged to receive the signal $S_{13}$, and $(F_{T1}, F_{T2})$ and $(F_{T29}, F_{T30})$ are arranged to receive the signal $S_{14}$ .

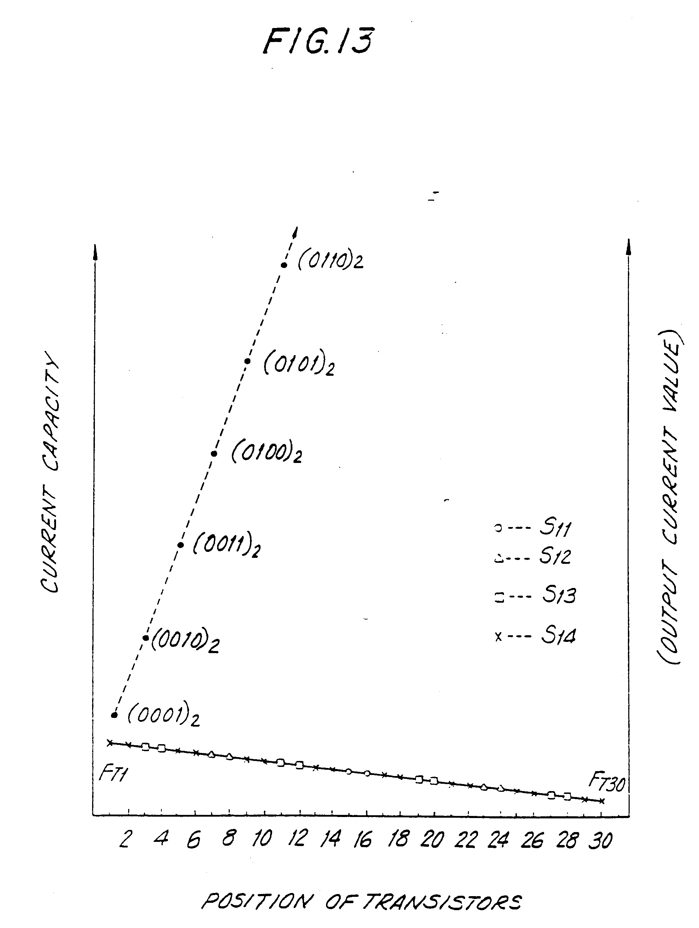

This digital-to-analog converter, in which each transistor unit constitutes two or more transistors positioned adjacent to each other, functions substantially the same as that shown in Figure 4, and offers linear characteristics for the output current as shown by the dashed line in Figure 13. One of the advantages of the arrangement is that it enables the digital-to-analog converter to have a larger number of transistors in a limited space, for example where the output pad pitch is narrow, without decreasing the width of the channels of the transistors.

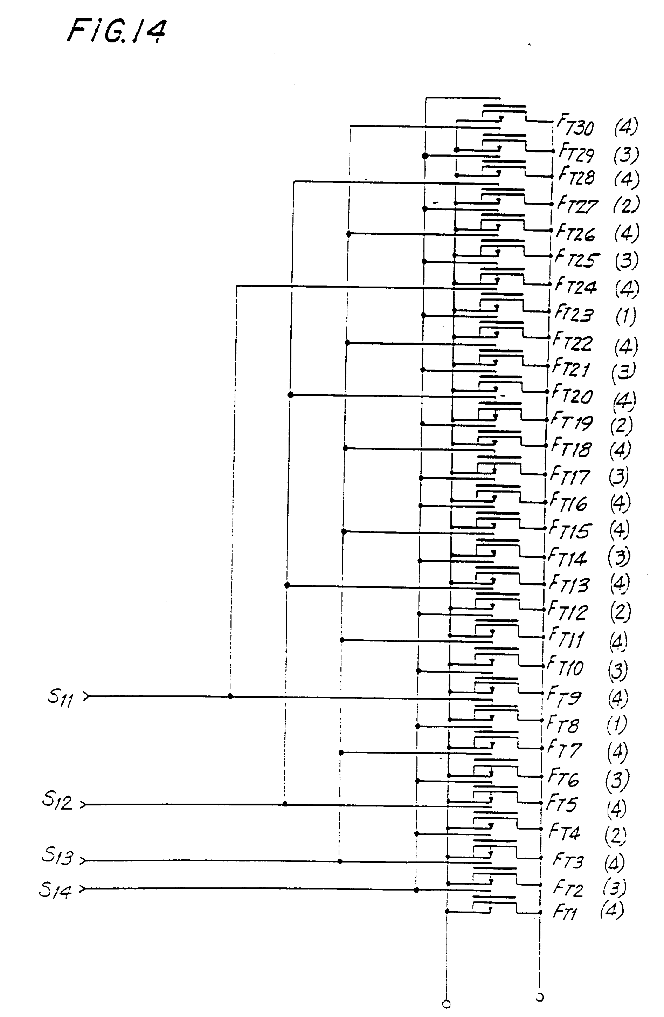

Figure 14 shows another arrangement for the connections between the inputs for the gate signals and the field effect transistors in the digital-to-analog converter. In this instance, thirty transistors $F_{T1}$ to $F_{T30}$ so of the same shape and size are arranged in a row at the same intervals to form the transistor array. As shown in Figure 14, wherein the bit numbers of the 4 bit serial digital signal are denoted in parentheses, the transistors $F_{T1}$ to $F_{T30}$ are connected so as to receive the control signals $S_{11}$ to $S_{14}$ as follows:

$$F_{T15}, F_{T16} \cdots S_{14}$$
$$F_{T14}, F_{T17} \cdots S_{13}$$
$$F_{T13}, F_{T18} \cdots S_{14}$$
$$F_{T12}, F_{T19} \cdots S_{12}$$
$$F_{T11}, F_{T20} \cdots S_{14}$$
$$F_{T10}, F_{T21} \cdots S_{13}$$
$$F_{T9}, F_{T22} \cdots S_{14}$$
$$F_{T8}, F_{T23} \cdots S_{11}$$
$$F_{T7}, F_{T24} \cdots S_{14}$$
$$F_{T6}, F_{T25} \cdots S_{13}$$
$$F_{T5}, F_{T26} \cdots S_{14}$$
$$F_{T4}, F_{T27} \cdots S_{12}$$
$$F_{T3}, F_{T28} \cdots S_{14}$$
$$F_{T2}, F_{T29} \cdots S_{13}$$
$$F_{T1}, F_{T30} \cdots S_{14}$$

In this transistor array again, pairs of transistors function as unitary switching elements, as in the transistor array shown in Figure 12. However, the two transistors forming each pair are not positioned adjacent to each other apart from the transistors $F_{T15}$ and $F_{T16}$ forming the unitary switching element located in the centre of the array. Each of the above pairs forms a respective unitary switching element, wherein the two transistors of each pair are positioned symmetrically with respect to the centre of gravity of the middle unitary switching element comprising the transistors $F_{T15}$ and $F_{T16}$. As to the expression "centre of gravity", since the transistors are of the same shape and size and are arranged at the same intervals in this embodiment, the centre of gravity of the middle pair of transistors corresponds to the centre point between these transistors or the centre of the array.

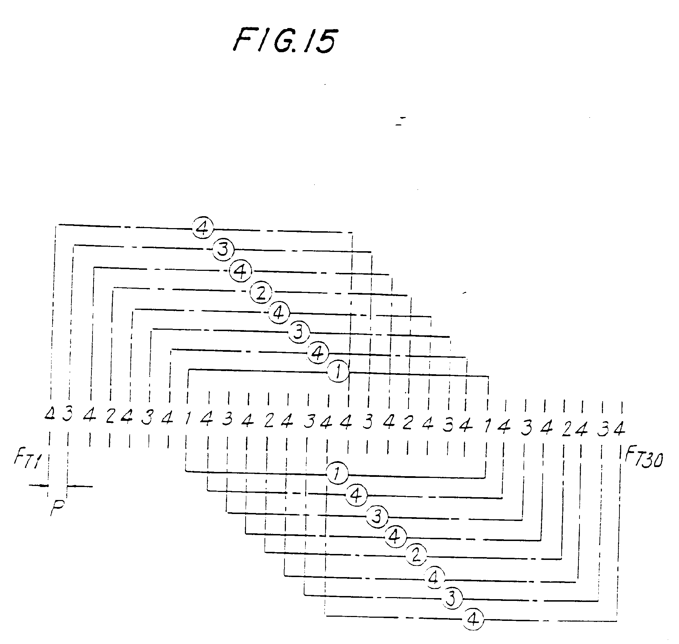

With reference to Figure 15, the positions of the transistors $F_{T1}$ to $F_{T30}$ are denoted by the bit numbers 1 to 4 of the gate signal. The transistors $F_{T18}$ and $F_{T23}$ supplied with the gate signal $S_{11}$ are spaced apart from each other by 15p and have their centre of gravity located at the centre of the array. The transistors $F_{T19}$ and $F_{T24}$ have their centre of gravity displaced by 1p to the right of the centre of gravity of the transistor $F_{T18}$ and $F_{T23}$, and are supplied with the gate signal $S_{14}$. Likewise, by picking pairs of transistors one by one either to the right or to the left next to the transistors $F_{T18}$ and $F_{T23}$, and then writing down the bit number of the gate signals supplied to the picked pair of transistors, the bit number pattern becomes as follows:

$$4 \rightarrow 3 \rightarrow 4 \rightarrow 2 \rightarrow 4 \rightarrow 3 \rightarrow 4 \rightarrow 1 \rightarrow 4 \rightarrow 3 \rightarrow 4 \rightarrow 2 \rightarrow 4 \rightarrow 3 \rightarrow 4$$

This order is the same as that of the embodiment shown in Figure 4.

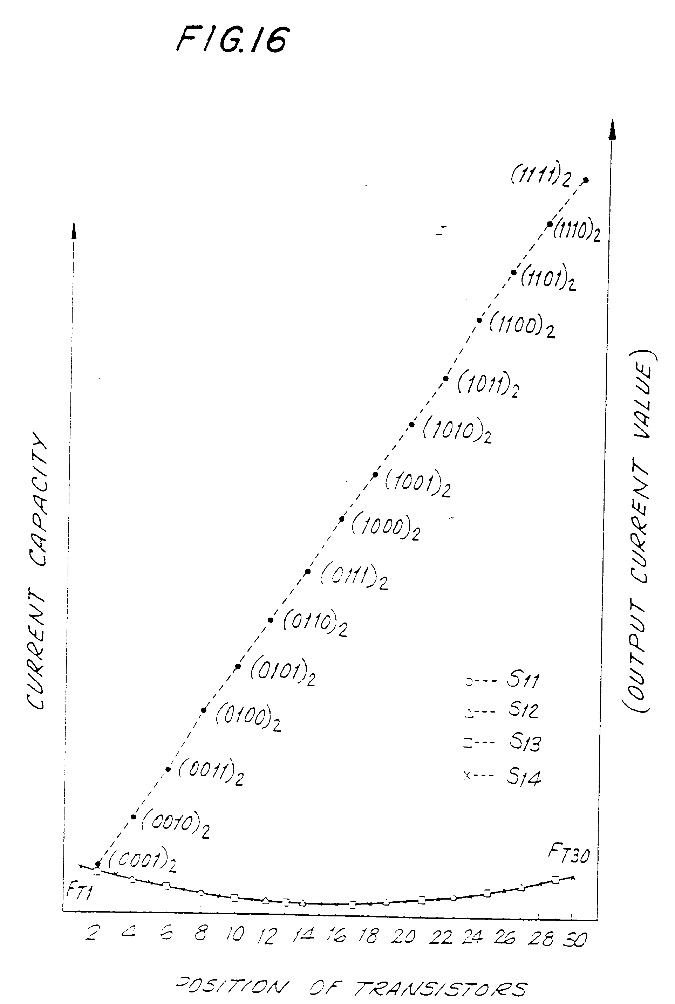

The arrangement of the present embodiment also effectively assures a monotonic characteristic for the output current where the current capacity of the transistors exhibits an uneven characteristic represented by a curve of secondary degree having a turning point. An example is shown in Figure 16, wherein the transistors of the array have a current capacity characteristic shown by the solid line having a turning point at the middle. In this case, since the transistors $F_{T8}$ and $F_{T23}$ are positioned apart from each other by as far as 15p, the total current capacity of these transistors is approximately twice the average current capacity of the thirty transistors $F_{T1}$ to $F_{T30}$. This also applies to each pair of transistors spaced apart from each other by 15p. According to the present embodiment, the monotonic characteristic for the output current can be obtained even when the current capacity of the transistors varies according to a curve having a turning point.

In the above embodiment, each unitary switching element may alternatively comprise three or more transistors which are positioned such that the centre of gravity of these transistors is situated at the centre of the array, whereby a monotonic characteristic for the output current can be obtained where the current capacity of the transistors follows a variety of characteristic curves. Thus, the versatility of the drive circuit can be further improved.

## Claims

1. A drive circuit for driving plural printing elements (19-1 to 19m) of a print head (19) for a printer, comprising a store (14) for receiving signals representing printing data for at least a portion of a line of print, output circuit means (18) responsive to such signals for generating plural outputs for driving the printing elements respectively for printing the at least a portion of the line of print, and output control means (17) responsive to predetermined correction codes for selectively adjusting the outputs whereby to compensate for variation in the characteristics of the respective printing elements and/or of circuit elements of the output circuit means for supplying the respective outputs wherein the output control means and the output circuit means are arranged to co-operate such that the amplitudes of the outputs are adjusted according to the correction codes, the output circuit means (18) comprising plural circuit portions (18-1 to 18-m), each including a plurality of switching elements ($F_{T1}$ to $F_{T15}$) for controlling the supply of current from a current source, the switching elements of each output circuit portion being connected in parallel so as to form a current synthesising circuit, wherein each output circuit portion has a number N of the switching elements divided into n groups characterised in that the number of switching elements belonging to the i-th group is $2^{i-1}$, wherein n<N, $1 \leqq i \leqq n$, each group of the switching elements being controlled by a corresponding bit of an n-bit digital control signal supplied by the output control means, and wherein the switching elements of each group are arranged symmetrically of the centre of the array of the switching elements and at equi-spaced intervals.

2. A drive circuit according to claim 1 characterised by a second store (16) for receiving signals representing the correction codes, the output control means (17) being arranged to receive the signals representing the correction codes and, in response to such signals, to generate corrected printing data signals.

3. A drive circuit according to claim 1 or 2 characterised in that the output control means comprise plural circuit portions (17-1 to 17-m) each comprising a control circuit (21) for determining the printing mode of a corresponding one of the printing elements and a level shifting circuit (22) for generating control voltages for application to the output circuit means.

4. A drive circuit according to any preceding claim characterised in that the output circuit means comprises means for generating plural current outputs of selectively adjustable current amplitude.

5. A drive circuit according to any preceding claim characterised in that each of the switching elements comprises at least one field effect transistor.

6. A drive circuit according to any preceding claim characterised in that each of the output circuit portions (18-1 to 18-m) further comprises at least one off-setting field transistor ($F_{os1}$).

7. A printer having a print head (19) including plural printing elements (19-1 to 19-m), means (1, 11 and 12) for generating printing data and correction codes and for supplying signals representing such printing data and correction codes as outputs, and characterised by a drive circuit according to any preceding claim.


**Patentansprüche**

1. Ansteuerungsschaltung zum Ansteuern von mehreren Druckelementen (19-1 bis 19-m) eines Druckkopfs (19) für einen Drucker, umfassend einen Speicher (14) zum Aufnehmen von Druckdaten für wenigstens einen Abschnitt einer Druckzeile darstellenden Signalen, auf derartige Signale ansprechende Ausgabeschaltungsmittel (18) zum Erzeugen von mehreren Ausgaben zum Ansteuern der jeweiligen Druckelemente, respektive zum Drucken des wenigstens einen Abschnitts der Druckzeile, und auf vorbestimmte Korrekturkodes ansprechende Ausgabesteuerungsmittel (17) zum selektiven Anpassen der Ausgaben, wodurch Schwankungen in der Charakteristik von den entsprechenden Druckelementen und/oder von Schaltungselementen der Ausgabeschaltungsmittel kompensiert werden, um die entsprechenden Ausgaben zu liefern, wobei die Ausgabesteuerungsmittel und die Ausgabeschaltungsmittel dazu angeordnet sind, derart zusammenzuwirken, daß die Amplituden der Ausgaben gemäß den Korrekturkodes angepaßt werden, wobei die Ausgabeschaltungsmittel (18) mehrere Schaltungsabschnitte (18-1 bis 18-m) umfassen, welche jeweils eine Mehrzahl von Schaltelementen ($F_{T1}$ bis $F_{T15}$) zum Steuern der Zuführung von Strom von einer Stromquelle umfassen, wobei die Schaltelemente jedes Ausgabeschaltungsabschnitts derart parallel geschaltet sind, daß eine Stromsynthetisierungsschaltung gebildet ist, wobei bei jedem Ausgabeschaltungsabschnitt eine Anzahl N der Schaltelemente in $\underline{n}$ Gruppen aufgeteilt ist, dadurch gekennzeichnet, daß die Anzahl der zur i-ten Gruppe gehörenden Schaltelemente $2^{i-1}$ ist, wobei n < N und $1 \leqq i \leqq n$, wobei jede Gruppe der Schaltelemente von einem entsprechenden Bit eines digitalen n-Bit-Steuersignals gesteuert wird, welches von den Ausgabesteuerungsmitteln bereitgestellt wird, und wobei die Schaltelemente jeder Gruppe symmetrisch zum Zentrum der Anordnung der Schaltelemente und mit gleichen Abständen angeordnet sind.

2. Ansteuerungsschaltung nach Anspruch 1, gekennzeichnet durch einen zweiten Speicher (16) zum Aufnehmen von die Korrekturkodes darstellenden Signalen, wobei die Ausgabesteuerungsmittel (17) dazu angeordnet sind, die die Korrekturkodes darstellenden Signale aufzunehmen und in Antwort auf derartige Signale korrigierte Druckdatensignale zu erzeugen.

3. Ansteuerungsschaltung nach Anspruch 1 oder 2, dadurch gekennzeichnet, daß die Ausgabesteuerungsmittel mehrere Schaltungsabschnitte (17-1 bis 17-m) umfassen, von denen jeder eine Steuerungsschaltung (21) zum Bestimmen des Druckmodus eines entsprechenden der Druckelemente umfaßt und eine Pegelverschiebungsschaltung (22) zum Erzeugen von Steuerungsspannungen zum Anlegen an die Ausgabeschaltungsmittel.

4. Ansteuerungsschaltung nach einem der vorhergehenden Ansprüche, dadurch gekennzeichnet, daß das Ausgabeschaltungsmittel Mittel zum Erzeugen von mehreren Stromausgaben mit selektiv anpaßbarer Stromamplitude umfaßt.

5. Ansteuerungsschaltung nach einem der vorhergehenden Ansprüche, dadurch gekennzeichnet, daß jedes der Schaltelemente wenigstens einen Feldeffekttransistor umfaßt.

6. Ansteuerungsschaltung nach einem der vorhergehenden Ansprüche, dadurch gekennzeichnet, daß jeder der Ausgabeschaltungsabschnitte (18-1 bis 18-m) ferner wenigstens einen Offset-Feldeffekttransistor ($F_{OS1}$) umfaßt.

7. Drucker mit einem Druckkopf (19) umfassend mehrere Druckelemente (19-1 bis 19-m), Mittel (1, 11 und 12) zum Erzeugen von Druckdaten und Korrekturkodes und zum Bereitstellen von Signalen, welche derartige Druckdaten und Korrekturkodes als Ausgaben darstellen, gekennzeichnet durch eine Ansteuerungsschaltung nach einem der vorhergehenden Ansprüche.

**Revendications**

1. Circuit de commande pour commander plusieurs éléments d'impression (19-1 à 19-m) d'une tête d'impression (19) pour une imprimante, comprenant une mémoire (14) destinée à recevoir des signaux représentant des données d'impression d'au moins une partie d'une ligne d'impression, des moyens de circuits de sortie (18) répondant aux signaux ci-dessus pour former plusieurs sorties d'entraînement des éléments d'impression respectifs afin d'imprimer la partie au moins de la ligne d'impression, et des moyens de commande de sortie (17) répondant à des codes de correction prédéterminés pour ajuster de manière sélective les sorties et compenser ainsi la variation des caractéristiques des éléments respectifs d'impression et/ou des éléments de circuit des moyens de circuits de sortie pour appliquer les sorties respectives, dans lequel les moyens de commande de sortie et les moyens de circuits de sortie sont agencés pour coopérer de manière à ajuster les amplitudes des sorties selon les codes de correction, les moyens des circuits de sortie (18) comprenant plusieurs parties de circuit (18-1 à 18-m), chacune comportant une pluralité d'éléments commutateurs ($FT_1$ à $FT_{15}$) pour commander l'application du courant d'une source de courant, les éléments commutateurs de chaque partie de circuit de sortie étant reliés en parallèle pour constituer un circuit synthétiseur de courant, dans lequel chaque partie de circuit de sortie comprend un nombre N d'éléments commutateurs partagés en n groupes, caractérisé en ce que le nombre des éléments commutateurs appartenant au ième groupe est $2^{i-1}$, avec $n<N, 1\leq i\leq n$, chaque groupe d'éléments commutateurs étant commandé par un bit correspondant d'un signal de commande numérique à n bits, appliqué par le moyen de commande de sortie, et dans lequel les éléments commutateurs de chaque groupe sont disposés symétriquement par rapport au centre du réseau des éléments commutateurs et équidistants.

2. Circuit de commande selon la revendication 1, caractérisé par une seconde mémoire (16) pour recevoir des signaux représentant les codes de correction, les moyens (17) de commande de sortie étant agencés pour recevoir les signaux représentant les codes de correction, et pour générer des signaux corrigés de données d'impression en réponse aux signaux reçus.

3. Circuit de commande selon une quelconque des revendications 1 ou 2, caractérisé en ce que les moyens de commande de sortie comprennent plusieurs parties de circuit (17-1 à 17-m) ayant chacune un circuit de commande (21) pour déterminer le mode d'impression d'un correspondant parmi les éléments d'impression et un circuit de décalage de niveau (22) pour générer des tensions de commande à appliquer aux moyens de circuits de sortie.

4. Circuit de commande selon une quelconque des revendications précédentes, caractérisé en ce que les moyens de circuits de sortie comprennent des moyens pour générer plusieurs courants de sortie ayant des amplitudes de courant réglables.

5. Circuit de commande selon une quelconque des revendications précédentes, caractérisé en ce que les éléments commutateurs comprennent au moins un transistor à effet de champ.

6. Circuit de commande selon une quelconque des revendications précédentes, caractérisé en ce que chacune des parties de circuit de sortie (18-1 à 18-m) comprend encore au moins un transistor à effet de champ de décalage ($F_{os1}$).

7. Imprimante comprenant une tête d'impression (19) ayant plusieurs éléments d'impression (19-1 à 19-m), des moyens (1, 11 et 12) pour générer des données d'impression et des codes de correction, et pour appliquer des signaux représentant de tels données d'impression et codes de correction comme sorties, et caractérisée par un circuit de commande selon une quelconque des revendications précédentes.

FIG.1

# FIG.2

INTEGRATED CIRCUIT
FOR DRIVING LED
PRINT HEAD

# FIG.3

# FIG. 4

FIG.5

POWER

SECOND CLOCK

CORRECTION DATA

FIRST CLOCK

DATA

$D_i$   $D_{i+1}$   $D_{i+2}$

LATCH SIGNAL

$L_i$   $L_{i+1}$   $L_{i+2}$

ENABLE SIGNAL

EP 0 367 550 B1

# FIG. 6

FIG.7

CURRENT SYNTHESIZER CIRCUIT

22

FIG. 8(a)

FIG. 8(b)

FIG. 8(c)

FIG. 8(d)

# FIG. 9

# FIG.10

# FIG. 11

FIG.12

FT30
FT29
FT28
FT27
FT26
FT25
FT24
FT23
FT22
FT21
FT20
FT19
FT18
FT17
FT16
FT15
FT14
FT13
FT12
FT11
FT10
FT9
FT8
FT7
FT6
FT5
FT4
FT3
FT2
FT1

$S_{11}$

$S_{12}$

$S_{13}$

$S_{14}$

$V_{SS}$

$O_1$

# FIG.13

CURRENT CAPACITY

(OUTPUT CURRENT VALUE)

$(0110)_2$

$(0101)_2$

$(0100)_2$

$(0011)_2$

$(0010)_2$

$(0001)_2$

○ --- $S_{11}$
△ --- $S_{12}$
□ --- $S_{13}$
× --- $S_{14}$

$FT1$

$FT30$

2 4 6 8 10 12 14 16 18 20 22 24 26 28 30

POSITION OF TRANSISTORS

# FIG.14

# FIG. 15

# FIG.16

FIG.17
PRIOR ART

EP 0 367 550 B1

FIG.18

PRIOR ART

CLOCK SIG.

CORRECTED DATA

LATCH SIG.
LEFT END
LATCH CIRCUIT

ENABLE SIG.

LEFT END FET

H ℓ₁

Hℓ₂

1 LINE DATA

H ℓ₃

(ℓ+1)₁

(ℓ+1)₂

ℓ₁

ℓ₂

ℓ₃

L

ℓ₄

4t

2t

t

t7

1 LINE
PRINTING

33